# EUROPEAN PATENT SPECIFICATION

(11) **EP 3 147 732 B1**
(45) Date of publication and mention of the grant of the patent: **26.02.2020**
(21) Application number: 16190420.6
(22) Date of filing: 23.09.2016
(51) Int. Cl.: G05B 19/042, G06Q 10/06, G05B 19/4065, G05B 23/02

(54) **MACHINE MONITORING WITH BEACON**
MASCHINENÜBERWACHUNG MIT WARNLICHTANLAGE
SURVEILLANCE DE MACHINES AVEC AVERTISSEMENT LUMINEUX

(30) Priority: 25.09.2015 US 201562232670 P
(43) Date of publication of application: 29.03.2017
(73) Proprietor: Axiom Group Inc, Aurora, ON L4G 1G3 (CA)
(72) Inventor: RIZZO, Perry, Whitchurch Stouffville, ON L4G 7X3 (CA); PATHMANATHAN, Ananth, Whitby, ON L1M 2N4 (CA)
(74) Representative: Bingham, Ian Mark

(56) References cited:
- WO-A1-2015/099895
- US-A1- 2002 077 711
- US-A1- 2010 211 670
- US-A1- 2012 251 996

## Description

### CROSS-REFERENCE TO RELATED APPLICATION

This application claims priority from US Provisional Patent Application No. 62/232,670, filed on September 25, 2015.

### FIELD

The present specification relates to monitoring systems, and a control box, for monitoring machinery, and specifically to monitoring systems and a control box for monitoring industrial machinery.

### BACKGROUND

For a production facility, any breakdowns or interruptions in the operation of its machines can be costly, with expenses arising from the lost production as well as the repair costs. Many machines, and in particular industrial machinery, are equipped with internal sensors and systems to gather status data on the operation of the machine. This data can take many forms including operational parameters and error codes. The nature, type, and format of this status data can be specific to each machine.

External monitoring systems and devices for industrial machinery typically need to be custom desgined to communicate with a given type of machine. This machine-specific design can take the form of a bespoke communication interface for the external monitoring system to be able to collect and process the nature, type, and format of the status data gathered by the internal sensors and systems of a given machine. These external monitoring systems often cannot be easily adapted to communicate with multiple machines, or with multiple types of machines. Furthermore, upon collecting these operational parameters and error codes, these external monitoring systems often require specifically designed computer programs running on an additional computing device to decode, process, and display the information in a format useful to an operator of the machine.

US2002077711 A1 discloses an asset utilization suite to collect data or information pertaining to the assets of a process plant.

In some monitoring systems stack lights are used to signal the operational status of a machine. In some cases, the monitoring system can activate a buzzer instead of the stack lights, which can emit a single, default type of sound.

### SUMMARY

The present invention relates to a system for monitoring industrial machinery according to independent claim 1.
The system comprises a status beacon and a stand alone control box, said control box comprising: a processor; a memory in communication with the processor; one or more communication interfaces in communication with the processor. The processor is configured to: receive, via at least one of the communication interfaces, status data from one or more machines; store the status data in the memory; generate one or more of audio notification data and visual notification data based on the status data; transmit, via at least one of the communication interfaces, one or more of the audio notification data and the visual notification data to one or more status beacons; transmit, via at least one of the communication interfaces, the status data to one or more computing devices; receive, via at least one of the communication interfaces, feedback data from the one or more computing devices; and transmit, via at least one of the communication interfaces, the feedback data to the corresponding one or more machines.

The processor can be further configured to: receive, via at least one of the communication interfaces, a selection of a status data report type from the one or more computing devices; process the status data stored in the memory to produce a status data report according to the selection of the status data report type; and transmit, via at least one of the communication interfaces, the status data report to the one or more computing devices.

The status data report type can comprise a record of one or more operational parameters of the one or more machines logged as a function of time over a given period of time.

The operational parameters can comprise error codes.

At least one of the communication interfaces can comprise a wireless communication interface.

The control box can be configured to receive the status data as 12V input and 24V input from the one or more machines.

The control box can further comprise an intensity control for adjusting the one or more of the audio notification data and the visual notification data to control an intensity of one or more of an audio notification and a visual notification produced by the status beacon based on the one or more of the audio notification data and the visual notification data respectively.

At least one of the communication interfaces can comprise five or more input channels configured to receive the status data from at least one of the one or more machines.

The status data can comprise malfunction data of a given malfunction of the one or more machines, and the processor is further configured to generate, based on the malfunction data, the one or more of the audio notification data and the visual notification data corresponding to a predetermined job function responsible for repairing the given malfunction.

For at least some types of status data, the processor can be configured to generate both the audio notification data and the visual notification data based on the status data.

According to another implementation of the present specification, there is provided a system for monitoring industrial machinery, the system comprising: a status beacon; and a control box in communication with the status beacon, one or more machines, and one or more computing devices. The control box is configured to: receive status data from one or more machines; store the status data in a memory; generate one or more of audio notification data and visual notification data based on the status data; transmit one or more of the audio notification data and the visual notification data to one or more status beacons; transmit the status data to one or more computing devices; receive feedback data from the one or more computing devices; and transmit the feedback data to the corresponding one or more machines. The status beacon is configured to: receive the one or more of the audio notification data and the visual notification data, and in response, produce one or more of a corresponding audio notification and a corresponding visual notification respectively.

The status beacon can comprise: a support having a cylindrical portion having a first end and a second end opposite the first end; a light source disposed on an outer surface of the cylindrical portion, the light source configured to emit a plurality of colors of human visible light according to a predetermined pattern based on the visual notification data; an audio emitter secured to the first end, the audio emitter configured to produce the audio notification based on the audio notification data; a base secured to the support proximate the second end; the based configured to allow attaching the status beacon to a substrate; and an antenna secured to the support, the antenna configured to wirelessly receive signals from the control box.

The predetermined pattern can comprise one or more of a color pattern, an intensity pattern, a spatial pattern, and a temporal pattern.

The light source can be disposed along a spiral around the outer surface of the cylindrical portion.

The light source can comprise a LED light strip.

The status beacon can further comprise a cylindrical pipe lens surrounding the light source, the pipe lens secured to the support.

The support can comprise an adjustable portion disposed between the second end and the base, the adjustable portion configured to allow for adjusting one or more of a size and a shape of the beacon thereby adjusting a position of the light source relative to the base.

The audio notification can comprise human speech.

### BRIEF DESCRIPTION OF THE DRAWINGS

Preferred implementations of the present specification will now be described, by way of example only, with reference to the attached Figures, wherein:
Figure 1 depicts a system diagram of an example system for monitoring industrial machinery, according to non-limiting implementations.
Figure 2 depicts a schematic representation of an example control box, according to non-limiting implementations.
Figure 3 depicts a side elevation view of an example beacon, according to non-limiting implementations.
Figure 4 depicts an exploded top perspective view of the beacon of Figure 3.
Figure 5 depicts a bottom plan view of the beacon of Figure 3.
Figure 6 depicts a top perspective view of the beacon of Figure 3 and an example control box, according to non-limiting implementations.

### DETAILED DESCRIPTION

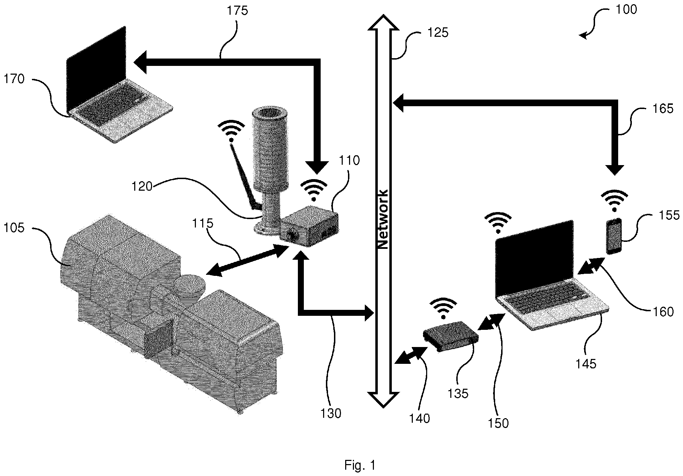

Fig. 1 shows a system diagram of an example system 100 for monitoring machines, including but not limited to industrial machinery. Machine 105 is in communication with a control box 110 via link 115. Control box 110 is in turn in communication with other computing devices, including but not limited to laptop 145 and smartphone 155. Control box 110 can communicate with laptop 145 and smartphone 155 by connecting through link 130 to network 125, to which laptop 145 and smartphone 155 can also connect. Control box 110 can also communicate with a status beacon 120.

Control box 110 is a stand-alone module that can communicate with one or more machines 105, and gather status data from any or all of those machines. Machines 105 can be of different types; for example injection molding machines, compressors, presses, and other types of machines. Control box 110 can store and process that status data and communicate it to one or more computing devices, such as laptop 145 and smartphone 155, directly or over network 125. Control box 110 can receive feedback data from those computing devices and relay the feedback data back to the correct one of the machines 105. In addition, control box 110 can activate one or more status beacons 120 according to the status data.

During the operation of machine 105, control box 110 collects status data from machine 105. This status data can include, but is not limited to, operational parameters and error codes for possible malfunctions. This status data can be collected by the internal sensors and monitoring systems of machine 105. Control box 110 can store this status data in its memory. Based on the status data, control box 110 can generate audio notification data and/or visual notification data, which control box 110 can then transmit to status beacon 120. Status beacon 120 can produce audio notifications and visual notifications based on the audio and visual notification data respectively.

Control box 110 can also process the status data and communicate them to computing devices such as laptop 145 and smartphone 155. If the machine operator, or a monitoring software running on laptop 145 and/or smartphone 155, inputs any feedback data in response to the status data, control box 110 can receive that feedback data and communicate it to machine 105. Feedback data can include, but is not limited to, instructions related to the operation of or the collection of status data at machine 105.

Control box 110 can also communicate with another computing device, including but not limited to programming laptop 170, to receive operational updates. These updates can include, but are not limited to, software updates allowing control box to communicate with a given type of machine 105. These updates can include the nature, type, and format of the status data collected by machine 105. For example, control box 110 can be updated to have a list of different error codes, and/or their operational meaning, collected and output by machine 105.

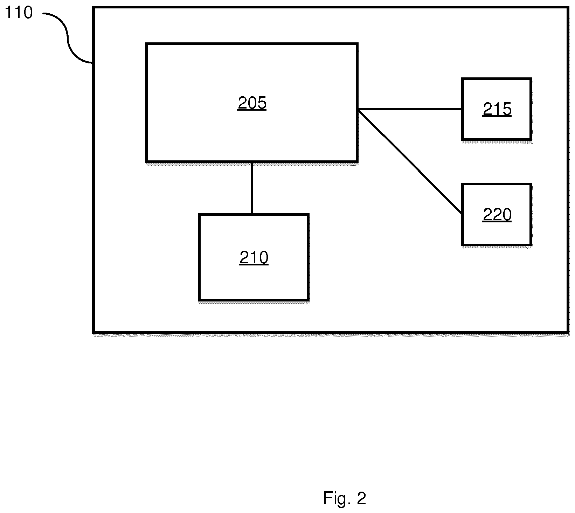

Turning now briefly to Fig. 2, control box 110 can comprise a processor 205 in communication with memory 210, and also in communication with one or more communication interfaces 215, 220. In some implementations, control box 110 can have only one communication interface. In some implementations, control box 110 can have more than two communication interfaces. Communication interfaces 215, 220 can comprise network cards and/or other data input/output interfaces. In some implementations, at least one of the communication interfaces 215, 220 can comprise a wireless communication interface. One or more of communication interfaces 215,220 can allow wired communication over a wired network and/or wireless communication over a wireless network such as WiFi network, a cellular network, a satellite communication network, or other communication networks known to the skilled person. One or more of communication interfaces 215,220 can allow communication over a network that is partly wired and partly wireless. Communication interfaces 215, 220 can facilitate wired and/or wireless communication between control box 110 and one or more of: one or more machines 105, one or more status beacons 120, one or more networks 125, one or more computing devices such as laptop 145 and smartphone 155, and one or more other computing devices such as programming laptop 170.

Now a more detailed description of system 100 and control box 110 will be provided. During operation of machine 105, control box 110 is in communication with machine 105 via link 115. Processor 205 of control box 110 receives, via at least one of communication interfaces 215,220, status data from machine 105. Processor 205 stores this status data in memory 210. In some implementations, control box 110 has sufficient on-board memory to store status data for one or more machines 105 over a period of one month or longer. In some implementations, memory 210 can have a capacity of about 8 Giga bytes, or larger. In some implementations, control box 110 can have a rolling memory, storing status data for an immediately preceding period of time, and automatically deleting any status data from before that period of time. For example, control box can continuously store and keep status data for the past month, while continuously deleting any status data that is older than a month to avoid exhausting the capacity of its memory 210.

Processor 205 can generate audio notification data and/or visual notification data based on the status data. By way of example only, and without limiting the scope of this specification, if status data indicates a supply feed interruption, processor 205 can generate audio notification corresponding to a warning sound and/or a visual notification corresponding to lights flashing in the yellow color. The precise translation of a given status data into audio/visual notification data can be factory-programmed into control box 110 and/or programmed into control box 110 using programming laptop 170 in communication with control box 110 via link 175. More details regarding audio and visual notifications will be later in this specification.

Control box 110 can monitor different machines 105, including multiple types of machines 105. Control box 110 can also be connected to multiple status beacons 120, including multiple types of status beacons. The translation of status data to audio/visual notification data can be specific to each individual machine 105, each type of machine 105, each individual status beacon 120, and/or each type of status beacon 120. The translation can also be dynamic by time of day, shift, production levels, manufacturing tolerance requirements, and any other parameters known to the skilled person. These dynamic translation rules can be programmed by programming laptop 170 into control box 110. For example, control box 110 can be programmed to generate notification data corresponding to a relatively higher intensity, e.g. louder, alarm for a malfunction during a high production level shift, when any interruptions in the production can lead to higher losses.

Processor 205 can transmit, via at least one of communication interfaces 215,220, the audio and/or visual notification data to one or more status beacons 120. The communication link between the control box 110 and each status beacon 120 can be wired or wireless. Each status beacon 120 can receive the audio and/or visual notification data, and in response produce one or more corresponding audio notification and corresponding visual notification respectively.

Processor 205 can also transmit, via at least one of communication interfaces 215,220, the status data to one or more computing devices such as laptop 145 and/or smartphone 155. To affect this communication, control box 110 can connect to network 125 using link 130. Network 125 can be wired or wireless. Network 125 can be the Internet. Laptop 145 can connect to network 125 directly, or via router 135 and through links 140 and 150. Smartphone 155 can connect to network 125 through link 165 or via laptop 145. In some implementations, computing devices such as laptop 145 and smartphone 155 can connect directly to control box 110. It is contemplated that any means and any network architectures known to the skilled person for connecting computing devices such as laptop 145 and smartphone 155 to control box 110 can be used. Links 140, 150, 160, and 165 can each be wired or wireless.

Computing devices such as laptop 145 and smartphone 155 can run error solving programs which can receive the status data from control box 110 and suggest improvement and/or repairs to any problems detected in the operation of machine 105. Alternatively, and/or in addition, a human operator using laptop 145 and/or smartphone 155 can monitor the status data of machine 105 and input improvements and/or repairs. The input from the human user of and/or programs running on computing devices such as laptop 145 and/or smartphone 155 can form feedback data, which can be received by processor 205 via at least one of communication interfaces 215,220. Processor 205 can then route and relay the feedback data, via at least one of communication interfaces 215,220, to machine 105.

When control box 110 is in communication with multiple machines 105, control box 110 can track which status data is connected to which machine 105, and can receive correlation data from computing devices, such as laptop 145 and smartphone 155, indicating which feedback data is intended for which machine 105. Using this correlation data, control box 110 can route the feedback data to the one or more machines 105 that are the correct recipients of the feedback data.

Links 115, 130, 140, 150, 160, 165, and 175 can each comprise one or more two-way communication links or multiple one-way communication links. When each of said links comprises multiple links, those links need not be of the same type or protocol. By way of example only, communicating relatively higher-bandwidth status data from control box 110 to computing devices such as laptop 145 and smartphone 155 can be via an at least partially-wired network connection, whereas the relatively lower-bandwidth feedback data from the computing devices back to control box 110 can be via a wireless network connection. Link 175 can be an HDMI link.

In some implementations, before sending status data to computing devices such as laptop 145 and smartphone 155, processor 205 receives, via at least one of communication interfaces 215,220, a selection of a status data report type from the computing devices. By way of example only, such a selection can come from a human user seeking to receive from control box 110 a status data report of a given type and/or format for machine 105. In response, processor 205 can process the status data stored in memory 210 to produce a status data report according to the selection of the status data report type. Then, processor 205 can transmit, via at least one of communication interfaces 215,220, the status data report to the computing device that requested the status data report and selected the status data report type.

In some implementations, the status data report type can comprise a record of one or more operational parameters of one or more machines 105, logged as a function of time for a given period of time. Operational parameters can include, but are not limited to, error codes. By way of example only, if machine 105 is an injection molding machine, the status report type can comprise a log of the feed material flow rate as a function of time over the preceding 24-hr period. It is contemplated that different status report types can comprise records of different operational parameters, in raw or processed form, for one or more machines 105, over any periods of time for which status data is stored within memory 210. In this implementation, computing devices, such as laptop 145 and smartphone 155, can be used to request the status data report type. Based on this request, processor 205 can retrieve the required data from memory 210, process and compile the data as per the status data report type requirements to produce the status data report, and then send the status data report to the computing device. Computing devices, such as laptop 145 and smartphone 155, are not involved in processing the status data to produce the status data report; they act as an interface to present the status data report. In this manner, status data storage and processing can be centralized in control box 110, which act as a stand-alone module. Control box 110 can in turn communicate with and provide status data reports to any number of different computing devices.

Communication interfaces 215,220 can be selected to be able to communicate with multiple machines 105 and with a variety of different types of machines 105. For example, the communication interfaces 215,220 can enable control box 110 to receive status data from machines 105 as either or both 12V and 24V input. Communication interfaces 215,220 can be selected to enable control box 110 to communicate with a large number of commonly-used industrial machines. The ability of control box 110 to communicate with a variety of machines can be further enhanced by using programming laptop 170 to update control box 110 to be able to receive the nature, type, and format of the status data output by additional types of machines.

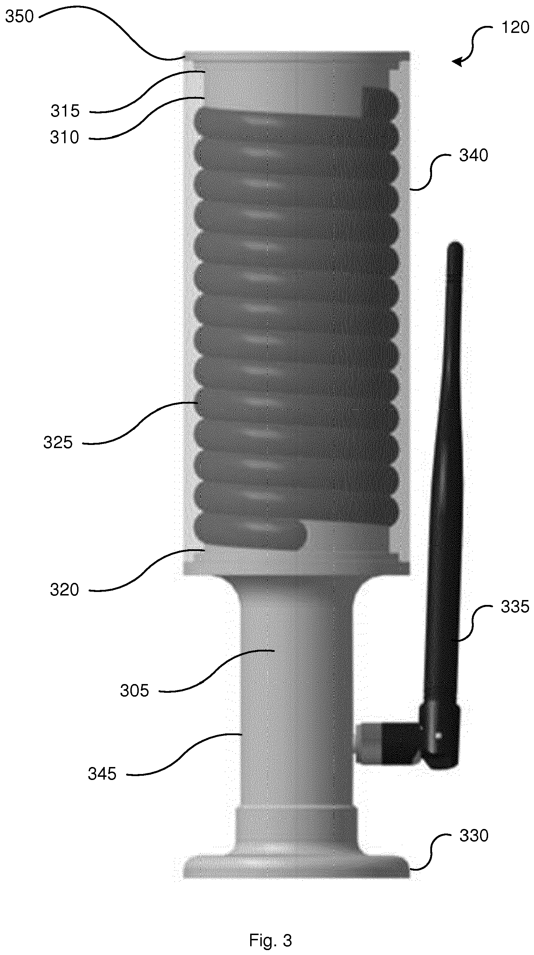

Turning now to Fig. 3, an exemplary implementation of status beacon 120 is depicted. Status beacon 120 can comprise a support 305 having a cylindrical portion 310 having a first end 315 and a second end 320 opposite the first end. A light source 325 can be disposed on the outer surface of cylindrical portion 310. Light source 325 can be configured to emit a plurality of colors of human visible light according to a predetermined pattern based on the visual notification data generated by processor 205 of control box 110.

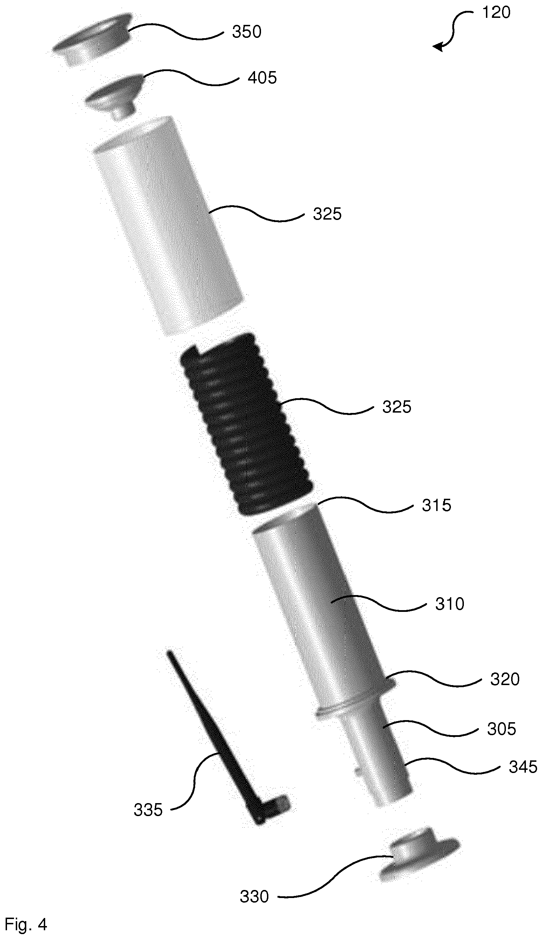

Status beacon 120 can further comprise an audio emitter (not visible in Fig. 3, but shown in Fig. 4) secured to first end 315. The audio emitter can be configured to produce an audio notification based on the audio notification data generated by processor 205 of control box 110. Status beacon 120 can also comprise a base 330 secured to support 305 proximate second end 320. Base 330 can be configured to allow attaching status beacon 120 to a substrate, including but not limited to, an outside surface of machine 105 or another object in the product facility where machine 105 operates.

Status beacon 120 can also comprise an antenna 335 to allow status beacon 120 to wirelessly receive signals from, and generally communicate with, control box 110, network 125, and/or computing devices such as laptop 145 and/or smartphone 155. In some implementations, antenna 335 can be a WiFi antenna. In some implementations, status beacon 120 can comprise a cylindrical pipe lens 340 surrounding light source 325. Cylindrical pipe lens 340 can be secured to support 305. In some implementations, cylindrical pipe lens 340 can be secured between a circumferential lip of support 305 proximate second end 320 and a collar 350 securable to support 305 proximate first end 315. Cylindrical pipe lens 340 can comprise glass, clear acrylic, clear polycarbonate, or other suitable clear plastics. Cylindrical pipe lens 340 can be tempered or coated. In some implementations, the covering of light source 325 can be a quadrilateral prism, a hexagonal prism, or other suitable geometrical shapes.

Collar 350 can be securable to first end 315 of cylindrical portion 310. Collar 350 can be threaded so that its threads can matingly engage complementary threads on an inner surface of cylindrical portion 310 proximate first end 315. In some implementations, an audio emitter can be secured to, and/or integrally formed with, collar 350.

Status beacon 120 can also comprise an adjustable portion 345, configured to allow for adjusting one or more of a size and a shape of status beacon 120 thereby adjusting a position of light source 325 relative to base 330. Adjustable portion 345 can be disposed between second end 320 and base 330. Adjustable portion 345 can comprise one or more of a telescoping mechanism, a gooseneck mechanism, a balanced-arm mechanism, and any other suitable adjustable mechanism known to the skilled person. By allowing changing the position of light source 325 relative to base 330, adjustable portion 345 can allow adjusting status beacon 120 already attached to a substrate so that its light source 325 is not obscured from those vantage points and/or viewers that need to be able to see light source 325.

Fig. 4 shows an exploded view of status beacon 120, depicting support 305, cylindrical portion 310 of support 305, first end 315 and second end 320 of cylindrical portion 310, light source 325, base 330, antenna 335, cylindrical pipe lens 340, adjustable portion 345, and collar 350. In some implementations, light source 325 can be disposed along a spiral around the outer surface of cylindrical portion 310. In some implementations, light source 325 can comprise a LED light strip. Light source 325 can be configured to emit two or more colors of human visible light. In some implementations, light source 325 can emit multiple colors without the use of multiple differently-color light bulbs and/or without the use of multiple, differently colored lenses. Light source 325 can be powered by at least three electrical leads each corresponding to one of three colors, which can be red, green, and blue. These electrical leads can be passed through a hollow middle of cylindrical portion 310 and adjustable portion 345 of support 305.

Fig. 4 also shows audio emitter 405 housed at least partially inside cylindrical portion 310 proximate first end 315. Audio emitter can comprise a speaker, an electrical bell, and electrical siren, or other suitable sound emitting devices known to the skilled person. In some implementations, audio emitter 405 is capable of emitting sounds replicating human speech. Audio emitter can be powered by at least two electrical leads passed through a hollow middle of cylindrical portion 310 and adjustable portion 345 of support 305. The audio emitter 405 electrical leads and the light source 325 electrical leads can be collected in a bunch forming a low voltage (e.g. 24V), multiplex connection cable for connection to control box 110. In other implementation, the connection of status beacon 120 to control box 110 can be a wireless connection between antenna 335 and at least one of communication interfaces 215,220 of control box 110.

All or portions of support 305 can comprise aluminum, which can be machined. Alternatively and/or in addition, all or portions of support 305 can comprise molded plastic and/or other metals or non-metals cast or machined, composite materials, painted and/or surface finished, according to the manufacturing environment and industrial or non-industrial application requests.

In some implementations, status beacon 120 can comprise a visual only or an audio only beacon. In some implementations, status beacon 120 can comprise a stack light. In some implementations, status beacon 120 can comprise a smart attend light.

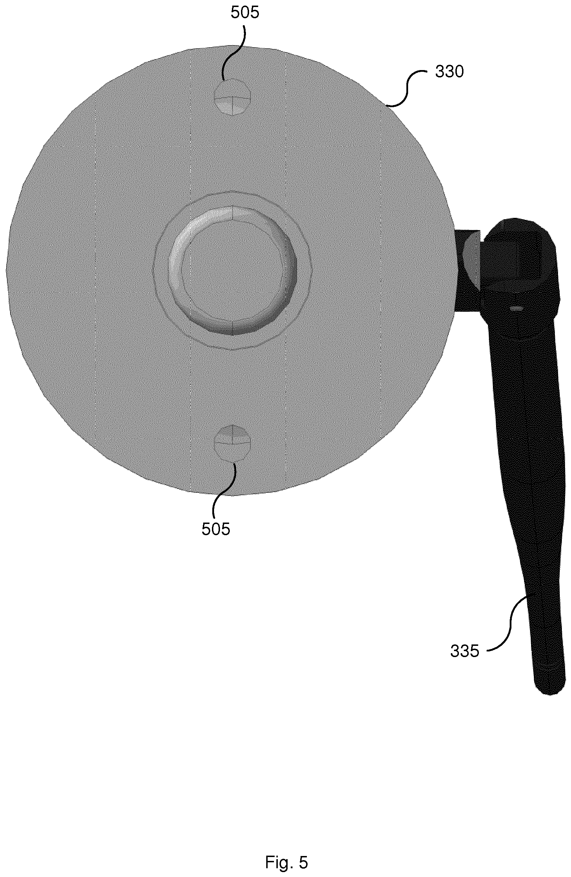

Turning now to Fig. 5, a bottom plan view of status beacon 120 is depicted, showing base 330 and antenna 335. Base 330 can have two mounting holes 505 for securing base 330 to a substrate. Mounting holes 505 can comprise threaded holes, or through holes. In other implementations, other means known to the skilled person can be used to secure base 330 to a substrate.

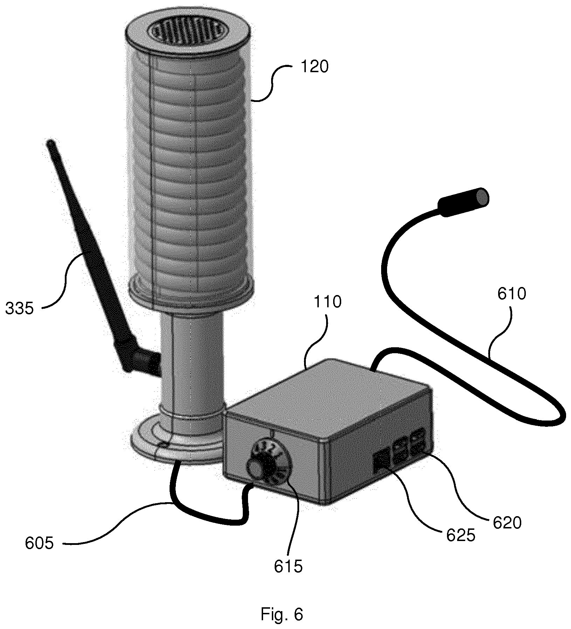

Turning now to Fig. 6, control box 110 is shown attached to status beacon 120 via cable 605. One or both of cable 605 and antenna 335 can be used to send audio and or visual notification data from control box 110 to status beacon 120, which in turn produces audio and/or visual notifications based on the corresponding audio and/or visual notification data. In some implementations, the audio notification can comprise sounds replicating human speech.

Visual notifications emitted by light source 325 can be emitted according to a predetermined pattern which can comprise one or more of a color pattern, an intensity pattern, a spatial pattern, and a temporal pattern. Color patterns can comprise different combinations of colors corresponding to different status data. By way of example only, a combination of yellow and red can signify a malfunction (e.g. signified by red) due to a material feed blockage (e.g. signified by yellow). Intensity patterns can also signify different status data. By way of example only, areas of low and high intensity can signal impending malfunctions, whereas a uniform high intensity can signal a malfunction that has actually occurred.

Spatial patterns can also signify different status data. By way of example only, a checkered or alternating pattern of red and yellow can signify caution attention to a developing malfunction, whereas a solid red pattern can signify stoppage of operations due to an actual malfunction. A temporal pattern can also signify different status data. Temporal patterns can include, but are not limited to, intermittent light emission such as flashing and/or strobing. By way of example only, a slowly flashing light can signify slightly-reduced feed volume, where as a rapidly flashing light can signify a significantly-reduced feed volume approaching a blockage of feed lines of machine 105.

These light emission patterns can be different for different machines or different types of machines. In addition, the light emission patterns can be different in different contexts; for example, different between day shift and night shift and/or different between high-volume and low-volume production times. The instructions for selecting the patterns for each machine and/or context can be programmed into control box 110 using another computing device such as programming laptop 170. These instructions can then be stored in memory 210 of control box 110.

These predetermined patterns can form part of rules used by control box 110 to translate the status data to the visual notification data and the audio notification data. Control box 110 can be programmed to store a table of correspondences between a given status data packet and a corresponding visual and/or audio pattern. In some implementations, for each given visual notification, there is a corresponding audio notification that will be generated to complement the visual notification. In some implementations, for each audio notification there is a corresponding visual notification that will be generated to complement the audio notification. In some implementations, for at least some types of status data, processor 205 of control box 110 can be configured to generate both the audio notification data and the visual notification data based on the status data, thereby causing a one-to-one correspondence of audio and visual notifications produced based on the notification data, at least for those types of status data.

In some implementations, control box 110 can comprise an intensity control for adjusting the one or more of the audio notification data and the visual notification data to control an intensity of one or more of an audio notification and a visual notification produced by status beacon 120 based on the one or more of the audio notification data and the visual notification data respectively. For example, control box 110 can comprise a potentiometer knob 615 for controlling the brightness of the visual notification or loudness of the audio notification generated by status beacon 120.

In some implementations, status data can comprise malfunction data of a given malfunction of the one or more machines 105, and processor 205 can be further configured to generate, based on the malfunction data, the one or more of the audio notification data and the visual notification data corresponding to a predetermined job function responsible for repairing the given malfunction. By way of example only, status data indicating a malfunction in the feed lines can be translated by processor 205 to generate visual notification data indicating yellow, with yellow being a designated color for the material feed team on the factory floor. In addition, processor 205 can general audio notification data corresponding to an audible call "feed team" to summon the feed team on the factory floor to assess and repair the malfunction in the feed lines. The precise notifications, and the precise translation of each status data packet to each notification data can be programmed into control box 110, for example as look up tables correlating status data packets and corresponding notification types.

In some implementations, control box comprises input cable 610 for connecting to machine 105. Input cable 610 can be connected to at least one of communication interfaces 215,220. Input cable 610 can comprise five or more input lines configured to receive the status data from five or more corresponding sensors and/or sources and/or data communication channels within machine 105. At least one of communication interfaces 215,220 can comprise five or more input channels configured to connect to the five or more input lines of cable 610. Control box 110 can also comprise one or more USB ports 620 and one or more Ethernet ports 625. These ports can be used to communicate operational updates to control box 110. These operational updates can include, but are not limited to, programming error code information for different types of machines 105 into control box 110. This programming, and other programming, of control box 110 can allow it to recognize the type of machine 105 it is connected to and to be able to receive its status data including error codes. In this manner, control box 110 can be connected to one or more machine types 105 in plug-and-play mode, i.e. without requiring machine-specific configuration when connecting to a type of machine 105 whose status data formats and error codes have previously been programmed into control box 110.

Control box 110 can be further programmable to allow custom programming for specific end user requirements. In other words, control box 110 can be customizable not only to communicate with different types of machines 105, but also to gather the types of status data, and to process the data in a way, that is required by the end user. The end user can be a human operator of machines 105 and/or a problem-solver software or other monitoring software running on a different computing device. In some implementations, control box 110 can have a programming interface that would allow for rapid and/or flexible customization of the programming of control box 110 to meet end user requirements.

In some implementations, control box 110 can use its Ethernet port 625 and/or wireless communication interface, to act as a stand-alone server and transmit the raw and/or processed status data directly over network 125.

The above-described implementations are intended to be examples only and alterations and modifications may be effected thereto, by those of skill in the art, without departing from the scope of the invention which is defined solely by the claims appended hereto.

## Claims

1. A system for monitoring industrial machinery, the system comprising:
one or more status beacons (120);
a control box (110) in communication with the one or more status beacons, one or more machines (105) of one or different types, and one or more computing devices (145, 155, 170);
wherein the control box is a stand-alone module, the control box comprising:
a processor;
a memory in communication with the processor;
one or more communication interfaces in communication with the processor;
the processor being adapted to:
receive status data from the one or more machines;
store the status data in the memory;
generate one or more of audio notification data and visual notification data based on translation of the status data to one or more of audio notification data and visual notification data, the translation being specific to each individual machine of the one or more machines and to each type of machine of the one or more machines and to each of the one or more status beacons;
transmit one or more of the audio notification data and the visual notification data to the one or more status beacons;
transmit the status data to one or more computing devices;
receive feedback data from the one or more computing devices; and
transmit the feedback data to the corresponding one or more machines; and
the one or more status beacons being adapted to:
receive the one or more of the audio notification data and the visual notification data, and
in response, produce one or more of a corresponding audio notification and a corresponding visual notification respectively.

2. The system of claim 1, wherein the one or more status beacons comprise:
a support having a cylindrical portion having a first end and a second end opposite the first end;
a light source disposed on an outer surface of the cylindrical portion, the light source configured to emit a plurality of colors of human visible light according to a predetermined pattern based on the visual notification data;
an audio emitter secured to the first end, the audio emitter configured to produce the audio notification based on the audio notification data;
a base secured to the support proximate the second end; the base configured to allow attaching the status beacon to a substrate; and
an antenna secured to the support, the antenna configured to wirelessly receive signals from the control box.

3. The system of claim 2, wherein the predetermined pattern comprises one or more of a color pattern, an intensity pattern, a spatial pattern, and a temporal pattern.

4. The system of any one of claims 2-3, wherein
the light source is disposed along a spiral around the outer surface of the cylindrical portion; and/or
the light source comprises a LED light strip; and/or
the one or more status beacons further comprise a cylindrical pipe lens surrounding the light source, the pipe lens secured to the support.

5. The system of any one of claims 2-4, wherein the support comprises an adjustable portion disposed between the second end and the base, the adjustable portion configured to allow for adjusting one or more of a size and a shape of the status beacon thereby adjusting a position of the light source relative to the base.

6. The system of any one of claims 1-5, wherein the audio notification comprises human speech.

7. The system of any one of claims 1-6, wherein the processor is further configured to:
receive, via at least one of the communication interfaces, a selection of a status data report type from the one or more computing devices;
process the status data stored in the memory to produce a status data report according to the selection of the status data report type; and
transmit, via at least one of the communication interfaces, the status data report to the one or more computing devices.

8. The system of claim 7, wherein the status data report type comprises a record of one or more operational parameters of the one or more machines logged as a function of time over a given period of time.

9. The system of claim 8, wherein the operational parameters comprise error codes.

10. The system of any one of claims 1-9, wherein
at least one of the communication interfaces comprises a wireless communication interface; and/or
the control box is configured to receive the status data as 12V input and 24V input from the one or more machines.

11. The system of any one of claims 1-10, wherein the control box further comprises an intensity control for adjusting the one or more of the audio notification data and the visual notification data to control an intensity of one or more of an audio notification and a visual notification produced by the status beacon based on the one or more of the audio notification data and the visual notification data respectively.

12. The system of any one of claims 1-11, wherein at least one of the communication interfaces comprises five or more input channels configured to receive the status data from at least one of the one or more machines.

13. The system of any one of claims 1-12, wherein the status data comprises malfunction data of a given malfunction of the one or more machines, and the processor is further configured to generate, based on the malfunction data, the one or more of the audio notification data and the visual notification data corresponding to a predetermined job function responsible for repairing the given malfunction.

## Patentansprüche

1. System zur Überwachung von Industriemaschinen, wobei das System umfasst:
ein oder mehrere Statuswarnlichtanlagen (120);
einen Steuerkasten (110) in Kommunikation mit der einen oder den mehreren Statuswarnlichtanlagen, einer oder mehreren Maschinen (105) eines oder unterschiedlichen Typs, und einer oder mehreren Rechenvorrichtungen (145, 155, 170); wobei der Steuerkasten ein eigenständiges Modul ist, wobei der Steuerkasten umfasst:
einen Prozessor;
einen Speicher in Kommunikation mit dem Prozessor;
eine oder mehrere Kommunikationsschnittstellen in Kommunikation mit dem Prozessor;
wobei der Prozessor eingerichtet ist zum:
Empfangen von Statusdaten von einer oder mehreren Maschinen;
Speichern der Statusdaten in dem Speicher;
Erzeugen einer oder mehrerer Audiobenachrichtigungsdaten und visueller Benachrichtigungsdaten basierend auf einer Übersetzung der Statusdaten in eine oder mehrere von Audiobenachrichtigungsdaten und visuellen Benachrichtigungsdaten, wobei die Übersetzung für jede einzelne Maschine der einen oder mehreren Maschinen und für jeden Maschinentyp der der einen oder mehreren Maschinen und für jede der einen oder mehreren Statuswarnlichtanlagen spezifisch ist;
Senden einer oder mehrerer der Audio-Benachrichtigungsdaten und der visuellen Benachrichtigungsdaten an die eine oder die mehreren Statuswarnlichtanlagen;
Senden der Statusdaten an eine oder mehrere Rechenvorrichtungen;
Empfangen von Rückmeldungsdaten von der einen oder den mehreren Rechenvorrichtungen; und
Senden der Rückmeldungsdaten an die entsprechende der einen oder mehreren Maschinen; und
die eine oder die mehreren Statuswarnlichtanlagen eingerichtet sind zum:
Empfangen der einen oder der mehrere der Audiobenachrichtigungsdaten und der visuellen Benachrichtigungsdaten, und
als Antwort, Erzeugen einer oder mehrerer einer entsprechenden Audiobenachrichtigung und einer entsprechenden visuellen Benachrichtigung.

2. System nach Anspruch 1, wobei die eine oder die mehreren Statuswarnlichtanlagen umfassen:
einen Träger mit einem zylindrischen Abschnitt mit einem ersten Ende und einem zweiten Ende gegenüber dem ersten Ende, eine Lichtquelle, die an einer Außenfläche des zylindrischen Abschnitts angeordnet ist, wobei die Lichtquelle konfiguriert ist, mehrere Farben von für Menschen sichtbarem Licht gemäß einem vorbestimmten Muster basierend auf den visuellen Benachrichtigungsdaten zu emittieren;
einen Audioemitter, der an dem ersten Ende befestigt ist, wobei der Audioemitter konfiguriert ist, die Audiobenachrichtigung basierend auf den Audiobenachrichtigungsdaten zu erzeugen;
eine Basis, die an dem Träger nahe dem zweiten Ende befestigt ist; wobei die Basis konfiguriert ist, ein Anbringen der Statuswarnlichtanlage an einem Substrat zu ermöglichen; und eine Antenne, die an dem Träger befestigt ist, wobei die Antenne konfiguriert ist, drahtlos Signale von dem Steuerkasten zu empfangen.

3. System nach Anspruch 2, wobei das vorbestimmte Muster eines oder mehrere von einem Farbmuster, einem Intensitätsmuster, einem räumlichen Muster und einem zeitlichen Muster umfasst.

4. System nach einem der Ansprüche 2 bis 3, wobei die Lichtquelle entlang einer Spirale um die Außenfläche des zylindrischen Abschnitts herum angeordnet ist; und/oder die Lichtquelle einen LED-Lichtstreifen umfasst; und/oder die eine oder die mehreren Statuswarnlichtanlagen ferner eine zylindrische Rohrlinse, die die Lichtquelle umgibt, umfassen, wobei die Rohrlinse an dem Träger befestigt ist.

5. System nach einem der Ansprüche 2 bis 4, wobei der Träger einen einstellbaren Abschnitt umfasst, der zwischen dem zweiten Ende und der Basis angeordnet ist, wobei der einstellbare Abschnitt konfiguriert ist, ein Einstellen einer oder mehrerer Größen und Formen der Statusbake zu ermöglichen, wodurch eine Position der Lichtquelle relativ zu der Basis eingestellt wird.

6. System nach einem der Ansprüche 1 bis 5, wobei die Audiobenachrichtigung menschliche Sprache umfasst.

7. System nach einem der Ansprüche 1 bis 6, wobei der Prozessor ferner konfiguriert ist zum:
Empfangen, über mindestens eine der Kommunikationsschnittstellen, einer Auswahl eines Statusdatenberichtstyps von der einen oder den mehreren Rechenvorrichtungen;
Verarbeiten der in dem Speicher gespeicherten Statusdaten, um einen Statusdatenbericht gemäß der Auswahl des Statusdatenberichtstyps zu erzeugen; und
Senden, über mindestens eine der Kommunikationsschnittstellen, des Statusdatenberichts an die eine oder die mehreren Rechenvorrichtungen.

8. System nach Anspruch 7, wobei der Statusdatenberichtstyp eine Aufzeichnung von einem oder mehreren Betriebsparametern der einen oder mehreren Maschinen, die als Funktion der Zeit über einen bestimmten Zeitraum protokolliert wurden, umfasst.

9. System nach Anspruch 8, wobei die Betriebsparameter Fehlercodes umfassen.

10. System nach einem der Ansprüche 1 bis 9, wobei mindestens eine der Kommunikationsschnittstellen eine drahtlose Kommunikationsschnittstelle umfasst; und/oder der Steuerkasten konfiguriert ist, die Statusdaten als 12-V-Eingabe und 24-V-Eingabe von einer oder mehreren Maschinen zu empfangen.

11. System nach einem der Ansprüche 1 bis 10, wobei der Steuerkasten ferner eine Intensitätssteuerung zum Einstellen der einen oder der mehreren der Audiobenachrichtigungsdaten und der visuellen Benachrichtigungsdaten umfasst, um eine Intensität einer oder mehrerer einer Audiobenachrichtigung und einer visuellen Benachrichtigung, die von der Statuswarnlichtanlage basierend auf den Audiobenachrichtigungsdaten bzw. den visuellen Benachrichtigungsdaten erzeugt werden, zu steuern.

12. System nach einem der Ansprüche 1 bis 11, wobei mindestens eine der Kommunikationsschnittstellen fünf oder mehr Eingangskanäle umfasst, die konfiguriert sind, die Statusdaten mindestens einer der einen oder mehreren Maschinen zu empfangen.

13. System nach einem der Ansprüche 1 bis 12, wobei die Statusdaten Fehlfunktionsdaten einer gegebenen Fehlfunktion der einen oder mehreren Maschinen umfassen, und der Prozessor ferner konfiguriert ist, basierend auf den Fehlfunktionsdaten die eine oder die mehreren der Audiobenachrichtigungsdaten und der visuellen Benachrichtigungsdaten entsprechend einer vorbestimmten Auftragsfunktion, die für die Reparatur der gegebenen Fehlfunktion verantwortlich ist, zu erzeugen.

## Revendications

1. Système de surveillance de machinerie industrielle, le système comprenant :
une ou plusieurs balises d'état (120) ;
un boîtier de commande (110) en communication avec les une ou plusieurs balises d'état, une ou plusieurs machines (105) d'un ou de plusieurs types différents, et un ou plusieurs dispositifs informatiques (145, 155, 170) ;
dans lequel le boîtier de commande est un module autonome, le boîtier de commande comprenant :
un processeur ;
une mémoire en communication avec le processeur ;
une ou plusieurs interfaces de communication en communication avec le processeur ; le processeur, étant adapté pour :
recevoir des données d'état à partir des une ou plusieurs machines ;
stocker les données d'état dans la mémoire ;
générer une ou plusieurs parmi des données de notification audio et des données de notification visuelle sur la base d'une traduction des données d'état à une ou plusieurs parmi des données de notification audio et des données de notification visuelle, la traduction étant spécifique à chaque machine individuelle des une ou plusieurs machines et à chaque type de machine des une ou plusieurs machines et à chacune des une ou plusieurs balises d'état ;
transmettre une ou plusieurs parmi les données de notification audio et les données de notification visuelle aux une ou plusieurs balises d'état ;
transmettre les données d'état à un ou plusieurs dispositifs informatiques ;
recevoir des données de rétroaction à partir des un ou plusieurs dispositifs informatiques ; et
transmettre les données de rétroaction aux une ou plusieurs machines correspondantes ; et
les une ou plusieurs balises d'état étant adaptées pour :
recevoir les une ou plusieurs parmi les données de notification audio et les données de notification visuelle, et en réponse, produire une ou plusieurs parmi une notification audio correspondante et une notification visuelle correspondante, respectivement.

2. Système selon la revendication 1, dans lequel les une ou plusieurs balises d'état comprennent :
un support ayant une partie cylindrique ayant une première extrémité et une seconde extrémité opposée à la première extrémité ;
une source de lumière disposée sur une surface extérieure de la partie cylindrique, la source de lumière étant configurée pour émettre une pluralité de couleurs de lumière visible par l'être humain selon un motif prédéterminé sur la base des données de notification visuelle ;
un émetteur audio fixé à la première extrémité, l'émetteur audio étant configuré pour produire la notification audio sur la base des données de notification audio ;
une base fixée au support à proximité de la seconde extrémité ; la base étant configurée pour permettre de rattacher la balise d'état à un substrat ; et
une antenne fixée au support, l'antenne étant configurée pour recevoir sans fil des signaux à partir du boîtier de commande.

3. Système selon la revendication 2, dans lequel le motif prédéterminé comprend un ou plusieurs parmi un motif de couleur, un motif d'intensité, un motif spatial, et un motif temporel.

4. Système selon l'une quelconque des revendications 2 à 3, dans lequel
la source de lumière est disposée le long d'une spirale autour de la surface extérieure de la partie cylindrique ; et/ou
la source de lumière comprend une réglette à DEL ; et/ou
les une ou plusieurs balises d'état comprennent en outre une lentille en tube cylindrique entourant la source de lumière, la lentille en tube étant fixée au support.

5. Système selon l'une quelconque des revendications 2 à 4, dans lequel le support comprend une partie réglable disposée entre la seconde extrémité et la base, la partie réglable étant configurée pour permettre de régler une ou plusieurs parmi une taille et une forme de la balise d'état, ajustant ainsi une position de la source de lumière par rapport à la base.

6. Système selon l'une quelconque des revendications 1 à 5, dans lequel la notification audio comprend la parole humaine.

7. Système selon l'une quelconque des revendications 1 à 6, dans lequel le processeur est configuré en outre pour :
recevoir, via au moins l'une des interfaces de communication, une sélection d'un type de rapport de données d'état à partir des un ou plusieurs dispositifs informatiques ;
traiter les données d'état stockées dans la mémoire pour produire un rapport de données d'état selon la sélection du type de rapport de données d'état ; et
transmettre, via au moins l'une des interfaces de communication, le rapport de données d'état aux un ou plusieurs dispositifs informatiques.

8. Système selon la revendication 7, dans lequel le type de rapport de données d'état comprend un enregistrement d'un ou de plusieurs paramètres de fonctionnement des une ou plusieurs machines connectées en fonction du temps sur une période de temps donnée.

9. Système selon la revendication 8, dans lequel les paramètres de fonctionnement comprennent des codes d'erreur.

10. Système selon l'une quelconque des revendications 1 à 9, dans lequel
au moins l'une des interfaces de communication comprend une interface de communication sans fil ; et/ou
le boîtier de commande est configuré pour recevoir les données d'état en entrée 12 V et en entrée 24 V à partir des une ou plusieurs machines.

11. Système selon l'une quelconque des revendications 1 à 10, dans lequel le boîtier de commande comprend en outre une commande d'intensité pour régler les une ou plusieurs parmi les données de notification audio et les données de notification visuelle pour commander une intensité d'une ou plusieurs parmi une notification audio et une notification visuelle produites par la balise d'état sur la base des une ou plusieurs parmi les données de notification audio et les données de notification visuelle, respectivement.

12. Système selon l'une quelconque des revendications 1 à 11, dans lequel au moins l'une des interfaces de communication comprend cinq canaux d'entrée ou plus configurés pour recevoir les données d'état à partir d'au moins l'une des une ou plusieurs machines.

13. Système selon l'une quelconque des revendications 1 à 12, dans lequel les données d'état comprennent des données de dysfonctionnement d'un dysfonctionnement donné des une ou plusieurs machines, et le processeur est configuré en outre pour générer, sur la base des données de dysfonctionnement, les une ou plusieurs parmi les données de notification audio et les données de notification visuelle correspondant à une fonction de travail prédéterminée responsable de la réparation du dysfonctionnement donné.
